# EUROPÄISCHE PATENTANMELDUNG

(11) **EP 3 081 367 A1**
(43) Veröffentlichungstag der Anmeldung: **19.10.2016**
(21) Anmeldenummer: 16155793.9
(22) Anmeldetag: 02.09.2014
(51) Int. Cl.: B29C 70/30, B60N 2/68, B29L 31/30, B29L 31/00

(54) **COMPOSITE-BAUTEIL FÜR EINEN FAHRZEUGSITZ SOWIE FAHRZEUGSITZ**

(30) Priorität: 05.09.2013 DE 102013217738; 21.11.2013 DE 102013223835
(62) Teilanmeldung aus: 14758883.4
(71) Anmelder: Johnson Controls Components GmbH & Co. KG, 67657 Kaiserslautern (DE)
(72) Erfinder: TER STEEG, Willem Jan, 50259 Pulheim (DE); KRAMM, Lars, 67705 Trippstadt (DE); BOLD, Jens, 50674 Köln (DE); FISCHER, Georg-Ludwig, 67722 Winnweiler (DE); WOLSIEFER, Harald, 67706 Krickenbach (DE); RIEDEL, Ulrich, 81925 München (DE)
(74) Vertreter: Liedhegener, Ralf

(57) **Zusammenfassung**

Die Erfindung betrifft ein Composite-Bauteil (110) für einen Fahrzeugsitz (1), insbesondere einen Kraftfahrzeugsitz, mit mehreren Gewebelagen (116) aus einem Fasermaterial und einem die Gewebelagen (116) fixierenden Matrixmaterial (118). Die äußere Bauteilkontur des Composite-Bauteils (110) ist zumindest abschnittsweise durch einen in das Matrixmaterial (118) eingebetteten Gewebestrang (125) gebildet. Die Gewebelagen (116) in den Abschnitten der äußeren Bauteilkontur des Composite-Bauteils (110), die durch einen in das Matrixmaterial (118) eingebetteten Gewebestrang (125) gebildet sind, enden vor der äußeren Bauteilkontur. Die Erfindung betrifft zudem einen Fahrzeugsitz (1), insbesondere einen Kraftfahrzeugsitz, mit einem Composite-Bauteil, insbesondere mit einer als Composite-Bauteil ausgeführten Lehnenstruktur (110).

## Beschreibung

Die Erfindung betrifft ein Composite-Bauteil für einen Fahrzeugsitz, insbesondere einen Kraftfahrzeugsitz, mit mehreren Gewebelagen aus einem Fasermaterial und einem die Gewebelagen fixierenden Matrixmaterial, wobei die äußere Bauteilkontur des Composite-Bauteils zumindest abschnittsweise durch einen in das Matrixmaterial eingebetteten Gewebestrang gebildet ist. Die Erfindung betrifft zudem einen Fahrzeugsitz, insbesondere einen Kraftfahrzeugsitz.

### Stand der Technik

Aus dem Stand der Technik sind Bauteile für Fahrzeugsitze aus Faserverbundwerkstoffen bekannt, die aus einzelnen Gewebelagen, die aus Fasermaterial bestehen, und aus einem das Fasermaterial umgebenden Matrixmaterial aufgebaut sind, so dass die Gewebelagen in das Matrixmaterial eingebettet sind. Diese Bauteile werden auch als Composite-Bauteile bezeichnet. Die Herstellung kann beispielsweise als Handlaminat oder als nicht automatisiertes Resin Transfer Molding-Verfahren (RTM) erfolgen. Die äußeren Ränder der einzelnen Gewebelagen schließen dabei aus Toleranzgründen nicht immer bündig am Bauteilrand ab, so dass der Bauteilrand des Composite-Bauteils zur Erzeugung eines glatten und kontinuierlichen Konturverlaufs in einem letzten arbeitsaufwendigen Herstellschritt umlaufend beschnitten werden muss.

Der Einsatz von Composite-Bauteilen als Sitzlehnen für Fahrzeugsitze ist aufgrund des aufwendigen Herstellverfahrens, insbesondere auch durch das Beschneiden der äußeren Sitzlehnenkontur, im Vergleich zu üblichen Stahlblechlehnen kostenintensiver.

Aus der DE 20 2007 018 487 U1 ist eine Fahrradfelge bekannt, wobei die Fahrradfelge ein Felgenbett, einen Felgenboden und das Felgenbett und den Felgenboden verbindende Felgenflanken, sowie Felgenhörner umfasst. Die Felge weist ein erstes mehrschichtiges Laminatband auf, welches aus einer ersten Anzahl von Streifen einer ersten Form und einer ersten Breite und einer ersten Länge, sowie einer zweiten Anzahl von Streifen einer zweiten Form, die von der ersten Form abweicht, besteht. Separate Hornbänder, die aus unidirektionalen Verstärkungsfasern bestehen, die von einem Gewebeschlauch oder einer Gewebelage umgeben sind, dienen zur Ausformung nach innen überstehender Teile der Felgenhörner. Die radial äußere Bauteilkontur der Felge wird durch die Laminatbänder gebildet. Radial über eine Grundform zur Herstellung der Felge überstehendes Material wird abgeschnitten.

Die EP 1 946 912 A2 offenbart ein Herstellverfahren für ein Composite-Bauteil, mit zwei Lagen vorimprägnierter Fasern, wobei die äußere Bauteilkontur des Composite-Bauteils zumindest abschnittsweise durch einen Gewebestrang gebildet ist.

Aus der EP 2 383 093 A1 ist ein Verfahren bekannt zum Herstellen eines Faserverbundbauteils, das Verstärkungsfasern und ein Matrixmaterial enthält und bei dem wenigstens ein Teil der Fasern in Form von Fasermateriallagen bereitgestellt werden, wobei ein Vorkörper des Bauteils aus Fasern und ungehärteter Matrix auf ein Unterwerkzeug aufgelegt und mit einer Fasermateriallage wenigstens so abgedeckt wird, dass Oberflächenbereiche des Vorkörpers, in denen Fasern enden, überdeckt sind und die abdeckende Lage am Rand ihres Überstands mit dem Unterwerkzeug in Kontakt steht, und dass das so vorbereitete Faserverbundbauteil unter Energieeintrag ausgehärtet wird.

### Aufgabe

Der Erfindung liegt die Aufgabe zu Grunde, ein Composite-Bauteil für einen Fahrzeugsitz derart zu gestalten, dass das Composite-Bauteil durch eine automatisierte Fertigung, insbesondere im RTM-Verfahren, hergestellt werden kann und auf ein Beschneiden der Bauteilkontur verzichtet werden kann. Das Composite-Bauteil soll insbesondere für einen Einsatz in einem Kraftfahrzeugsitz geeignet sein und die Kosten eines Fahrzeugsitzes sollen durch den Einsatz eines solchen Composite-Bauteils reduziert werden. Durch die reduzierten Kosten soll der Einsatz von Composite-Bauteilen, insbesondere von hochfesten Carbon-Lehnenstrukturen, im Fahrzeugsitz wettbewerbsfähig sein.

### Lösung

Diese Aufgabe wird erfindungsgemäß gelöst durch ein Composite-Bauteil für einen Fahrzeugsitz, insbesondere einen Kraftfahrzeugsitz, mit mehreren Gewebelagen aus einem Fasermaterial und einem die Gewebelagen fixierenden Matrixmaterial, wobei die äußere Bauteilkontur des Composite-Bauteils zumindest abschnittsweise durch einen in das Matrixmaterial eingebetteten Gewebestrang gebildet ist, wobei die Gewebelagen in den Abschnitten der äußeren Bauteilkontur des Composite-Bauteils, die durch einen in das Matrixmaterial eingebetteten Gewebestrang gebildet sind, vor der äußeren Bauteilkontur enden.

Eine, mehrere oder sämtliche Gewebelagen können vor der äußeren Bauteilkontur enden, so dass diese Gewebelagen aus Richtung der Bauteilmitte betrachtet nicht bis zur äußeren Bauteilkontur reichen. Im Bereich der äußeren Bauteilkontur können Abschnitte vorhanden sein, die ausschließlich aus dem Gewebestrang und Matrixmaterial bestehen.

Dadurch, dass die Gewebelagen in den Abschnitten der äußeren Bauteilkontur des Composite-Bauteils, die durch einen in das Matrixmaterial eingebetteten Gewebestrang gebildet sind, vor der äußeren Bauteilkontur enden, kann auf ein nachträgliches Beschneiden der Bauteilkontur verzichtet werden. Erfindungsgemäß kann das Composite-Bauteil genau einen Gewebestrang oder wenigstens einen Gewebestrang aufweisen. Die Verwendung mehrerer Gewebestränge oder eines aus mehreren Teilsträngen zusammengesetzten Gewebestrangs ist ebenfalls möglich. Mehrere Gewebestränge können in Umfangsrichtung des CompositeBauteils hintereinander, nebeneinander und/oder parallel zueinander angeordnet sein.

Der Gewebestrang ist zur Anbindung an die Gewebelagen in das Matrixmaterial eingebettet und somit zumindest teilweise von Matrixmaterial umgeben. Unter dem Begriff eingebettet ist ein vollständiges oder ein teilweises Ummanteln des Gewebestrang-Gewebes mit Matrixmaterial oder ein vollständiges Durchdringen oder ein teilweises Durchdringen des Gewebes mit Matrixmaterial sowie jede Kombination hieraus zu verstehen.

Der Gewebestrang ist vorzugsweise als ein Gewebeschlauch oder ein Geflechtschlauch ausgeführt. Ein Unterschied des Geflechtschlauches zum Gewebeschlauch besteht darin, dass beim Flechten des Geflechtschlauches die Fäden nicht rechtwinklig zugeführt werden. Alternativ ist der Gewebestrang als ein Gewebeband oder eine Litze, d.h. ein weitgehend flaches, insbesondere zweidimensionales Geflecht ausgeführt. An sich bekannte Gewebeschläuche und Geflechtschläuche bzw. Gewebebänder und Litzen, die kostengünstig verfügbar sind, können als Gewebestrang verwendet werden, was die Bauteilkosten reduziert. Der Begriff Gewebestrang ist als Sammelbegriff für länglich ausgebildete, an sich bekannte Gewebe und Geflechte, unabhängig von Winkellagen der Fasern untereinander oder absolut, zu verstehen.

Vor dem Einbringen in das Matrixmaterial hat der Gewebestrang eine längliche, begrenzt flexible Struktur, so dass der Gewebestrang entlang der gewünschten Außenkontur des Composite-Bauteils in ein Werkzeug eingelegt und ausgerichtet werden kann. Dabei verläuft der Gewebestrang zumindest abschnittsweise entlang der Außenkontur des Composite-Bauteils und tangential entlang der gewünschten Bauteilkontur, so dass die Bauteilkontur des Composite-Bauteils durch den - gegebenenfalls von Matrixmaterial umgebenen - Gewebestrang gebildet ist.

Aufgrund der ursprünglichen Flexibilität des Gewebestrangs kann dieser einen gekrümmten, insbesondere dreidimensional gekrümmten, Konturverlauf der Bauteilaußenkante bilden.

Unter den Begriffen Gewebeschlauch und Geflechtschlauch sind nicht nur Schlauchformen mit kreisrundem Querschnitt zu verstehen, sondern alle länglich gestalteten Gewebe oder Geflechte, insbesondere Endlosgewebe oder Endlosgeflechte, die einen geschlossenen Querschnitt beliebiger Kontur haben.

Der Querschnitt des Ausgangsgewebes des Gewebe- oder Geflechtschlauches kann innerhalb des Composite-Bauteils gegenüber seiner ursprünglichen Form verformt sein. Beispielsweise kann ein Gewebe- oder Geflechtschlauch mit einem ursprünglich kreisrunden Querschnitt in eine flache Form gebracht sein.

Unter den Begriffen Gewebeband und Litze sind alle länglich gestalteten Gewebe und Geflechte, insbesondere Endlosgewebe und Endlosgeflechte zu verstehen, die einen offenen Querschnitt beliebiger Kontur haben. Der Ausgangsquerschnitt des Ausgangsgewebes kann zur Verwendung in dem Composite-Bauteil verformt sein.

Der Querschnitt des Ausgangsgewebes des Gewebebandes oder der Litze kann innerhalb des Composite-Bauteils gegenüber seiner ursprünglichen Form verformt sein. Beispielsweise kann ein Gewebeband oder eine Litze mit ursprünglich ebenem Querschnitt in eine dreidimensionale Form gebracht sein.

Vorzugsweise sind weitere Funktionen in den Gewebestrang integriert, beispielsweise kann ein Gewebeschlauch oder ein Geflechtschlauch in eine S-Form gebracht werden und somit bei einer Ausbildung des Composite-Bauteils als Lehnenstruktur einer Fahrzeugsitzlehne einer Bezugsabhängung dienen.

Die äußeren Ränder der Gewebelagen des Composite-Bauteils überlappen den Gewebestrang teilweise, ragen jedoch nicht über die äußere Bauteilkontur des Composite-Bauteils hinaus. Dadurch können die Abmessungen der Gewebelagen größere Toleranzen aufweisen, ohne die äußere Bauteilkontur des CompositeBauteils zu beeinflussen. Je breiter der Gewebestrang in Richtung der Mitte des Composite-Bauteils ausgebildet ist, umso größer können die Toleranzen der Abmessungen der Gewebelagen sein. Die sich überlappenden Bereiche der Gewebelagen und des Gewebestrangs sind durch das Matrixmaterial fest miteinander verbunden.

Die äußere Bauteilkontur des Composite-Bauteils ist vorzugsweise zumindest abschnittsweise durch zwei parallel verlaufende, in das Matrixmaterial eingebettete Gewebestränge, insbesondere Gewebeschläuche oder Geflechtschläuche, gebildet. Parallel verlaufend bedeutet in diesem Zusammenhang, dass die beiden Gewebestränge im Wesentlichen entlang einer gemeinsamen Linie entlang der äußeren Bauteilkontur des Composite-Bauteils verlaufen. Vorzugsweise haben die beiden Gewebestränge eine weitgehend gleiche Form. Die äußeren Ränder der Gewebelagen liegen vorteilhafterweise zwischen den beiden Gewebesträngen, so dass die in Richtung der Bauteilmitte orientierten Enden der beiden Gewebestränge die äußeren Ränder der Gewebelagen umklammern. Fixiert wird diese Anordnung der Gewebestränge und Gewebelagen durch Matrixmaterial. Dadurch wird eine besonders hohe Festigkeit zwischen den Gewebesträngen und den Gewebelagen erreicht.

Ein kostenoptimiertes Composite-Bauteil weist eine Litze, insbesondere genau eine Litze, als Gewebestrang auf. Dabei umklammern die äußeren Ränder der Gewebelagen die Litze, stehen nach außen jedoch nicht über die Litze über.

Das Composite-Bauteil umfasst fertig vorkonfektionierte Gewebelagen. Während des Herstellungsprozesses werden die Gewebelagen und der Gewebestrang vorzugsweise durch einen Roboter in einem Werkzeug positioniert. Bei geringen Stückzahlen kann die Positionierung jedoch auch manuell erfolgen.

Ein Einsatz eines erfindungsgemäßen Composite-Bauteils in einem Fahrzeugsitz ermöglicht gewichtsreduzierte und hochfeste Fahrzeugsitze. Vorzugsweise ist die Lehnenstruktur aus einem solchen Composite-Bauteil gebildet und kann dadurch hohe Lasten, insbesondere Crashlasten aufnehmen und über mindestens einen Beschlag in die Fahrzeugkarosserie oder in einen Sitzunterbau ableiten.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine perspektivische Ansicht eines ungepolsterten Fahrzeugsitzes mit einer Lehne gemäß dem Ausführungsbeispiel,
- Fig. 2:: eine Seitenansicht des ungepolsterten Fahrzeugsitzes aus Fig. 1,

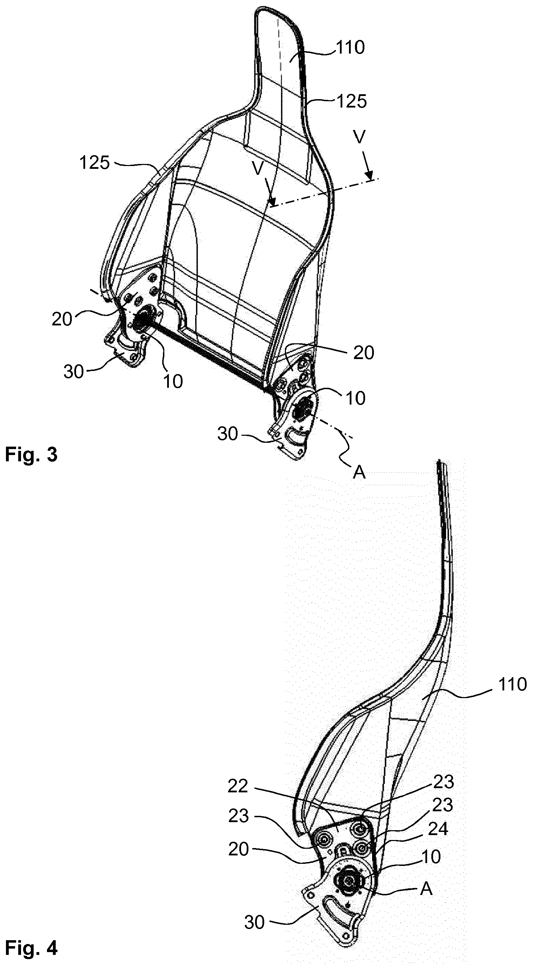

- Fig. 3:: eine perspektivische Ansicht der Lehne aus Fig. 1,
- Fig. 4:: eine Seitenansicht der Lehne aus Fig. 1,
- Fig. 5:: einen Schnitt entlang der Linie V - V in Fig. 3,
- Fig. 6:: eine perspektivische Rückansicht der Lehne aus Fig. 1,
- Fig. 7:: eine Detailansicht aus Fig. 6 und
- Fig. 8:: einen Schnitt entlang der Linie VIII - VIII in Fig. 7.

Ein vorliegend als Sportsitz ausgebildeter Fahrzeugsitz 1 für ein Kraftfahrzeug weist eine Sitzlehne und einen Sitzunterbau auf. Die Sitzlehne und der Sitzunterbau sind mittels zweier an sich bekannter Beschläge 10 miteinander verbunden. Dazu weist jeder der beiden Beschläge 10 ein mit einer Lehnenstruktur 110 der Sitzlehne verbundenes Beschlagoberteil 20 und ein mit einer Sitzunterbaustruktur 210 des Sitzunterbaus verbundenes Beschlagunterteil 30 auf. Das Beschlagoberteil 20 und das Beschlagunterteil 30 sind über einen an sich bekannten Beschlagmechanismus, beispielsweise einen Rastbeschlag oder einen Getriebebeschlag, relativ zueinander verstellbar, so dass die Neigung der Lehnenstruktur 110 um eine Lehnenschwenkachse A einstellbar ist.

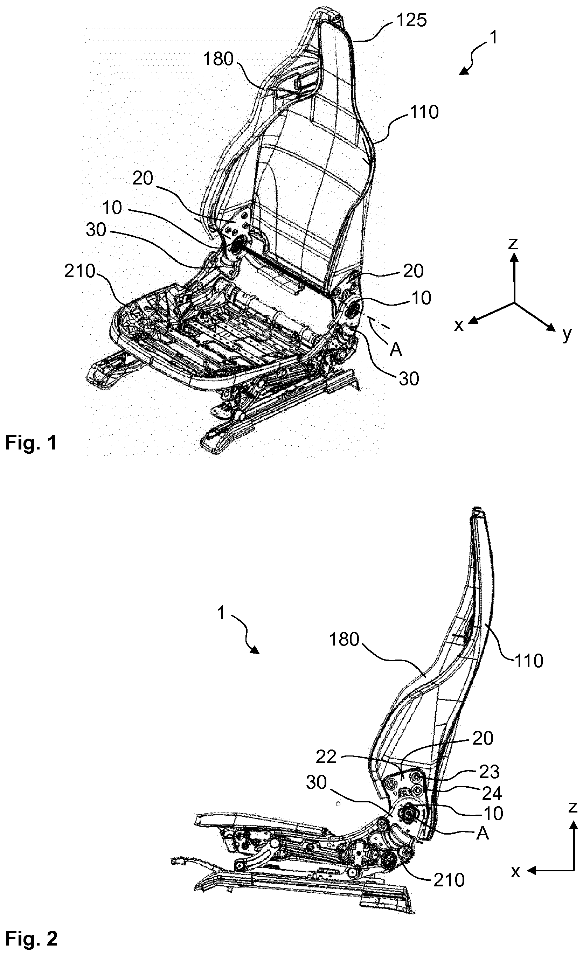

Der in Figur 1 ungepolstert dargestellte Fahrzeugsitz 1 wird nachfolgend unter Verwendung von drei senkrecht aufeinander stehenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Sitzlehne und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Die Lehnenstruktur 110 ist seitlich und von hinten mit einer Designschale 180 abgedeckt, die in den Figuren 1 und 2 im Halbschnitt dargestellt ist. Auf der Vorderseite der Lehnenstruktur 110 ist bei einem gepolsterten Fahrzeugsitz 1 ein in den Figuren nicht dargestelltes Schaumteil angeordnet. Das Schaumteil ist mit einem ebenfalls in den Figuren nicht dargestellten Bezug abgedeckt, dessen äußeren Randkonturen an der Designschale 180 oder alternativ an der Lehnenstruktur 110 befestigt sind, so dass der Bezug und die Designschale 180 die Lehnenstruktur 110 und das Schaumteil zwischen sich aufnehmen. In einer Abwandlung des Ausführungsbeispiels entfällt die Designschale 180 und die Rückseite der Lehnenstruktur 110 bildet die hinterste sichtbare Fläche der Lehne.

Die Designschale 180 und der Bezug definieren das äußere Design der Sitzlehne, ohne wesentlich zur Festigkeit der Sitzlehne beizutragen. Die Designschale 180 ist vorliegend ein Spritzgussteil aus einem an sich bekannten Kunststoff. Der Bezug besteht vorzugsweise weitgehend aus Stoff und/oder Leder.

Die Lehnenstruktur 110 ist ein lasttragendes Strukturteil des Fahrzeugsitzes 1. Die auf die Sitzlehne wirkenden Kräfte, insbesondere Crashkräfte, werden weitgehend von der Lehnenstruktur 110 aufgenommen und über die Beschläge 10 in die Sitzunterbaustruktur 210 weitergeleitet.

Die Lehnenstruktur 110 ist ein Composite-Bauteil und weist eine Schalenbauweise aus einem Verbundwerkstoff auf. Vorliegend umfasst die Lehnenstruktur 110 einen Verbund aus einem Harz, insbesondere einem Epoxydharz, als Matrixmaterial 118 und einer Vielzahl von das Matrixmaterial 118 verstärkenden Kohlenstofffasern, auch Carbonfasern genannt.

Die Carbonfasern sind in mehreren Gewebelagen 116 angeordnet, wobei jede der Gewebelagen 116 ein dreidimensional geformtes Flächengebilde ist, insbesondere ein multiaxiales Flächengebilde, bei dem die Carbonfasern in unterschiedlichen Richtungen zueinander angeordnet sind und ein Gewebe bilden. In einer Abwandlung des Ausführungsbeispiels sind die Fasern unidirektional angeordnet oder es ist ein Gelege verwendet.

Die Gewebelagen 116 sind von dem Matrixmaterial 118 umgeben und durchdrungen, indem die Lehnenstruktur 110 beispielsweise mittels eines Resin Transfer Molding-Verfahrens (RTM) oder eines anderen an sich bekannten Verfahrens zur Herstellung von carbonfaserverstärkten Kunststoffbauteilen hergestellt ist.

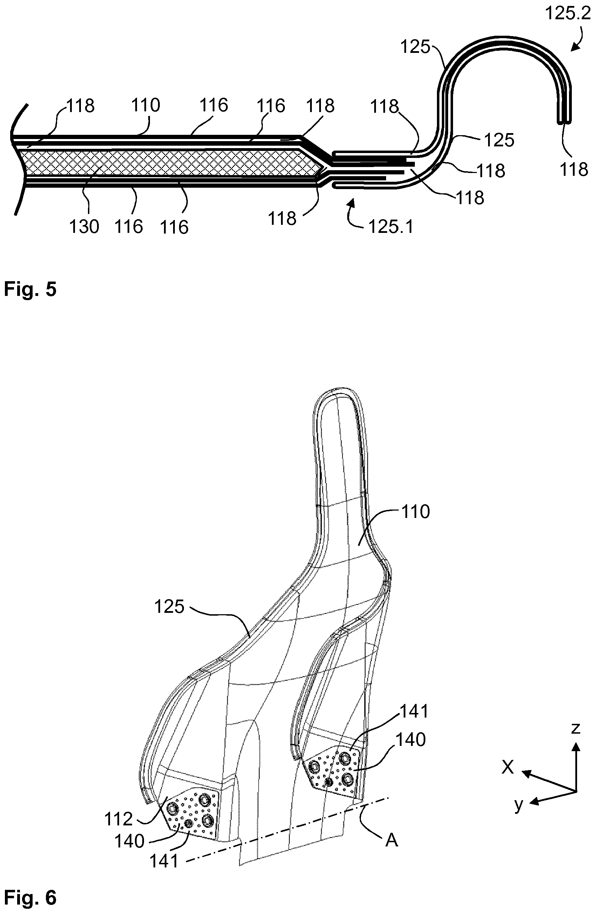

Zwischen einzelnen Gewebelagen 116 sind über weite Bereiche der Lehnenstruktur 110 abschnittsweise ein Kern 130 oder alternativ mehrere Kerne 130 angeordnet. Figur 5 zeigt einen Schnitt durch die Lehnenstruktur 110 in einem einen Kern 130 aufweisenden Bereich. Der Kern 130 ist zwischen zwei annähernd gleich dicken Lagen von jeweils mehreren mit Matrixmaterial 118 umgebenen Gewebelagen 116 angeordnet. Dadurch entsteht ein Sandwichaufbau aus dem Kern 130 und dem aus Gewebelagen 116 und Matrixmaterial 118 bestehenden Verbundwerkstoff.

Der Kern 130 besteht aus einem steifen Schaum oder alternativ aus einem weichen Schaum, beispielsweise aus PVC-Schaum und dient der Energieaufnahme und Energieabsorption, beispielsweise im Falle eines Unfalls.

Der äußere, umlaufende Randbereich der Lehnenstruktur 110 ist abschnittweise durch zwei in Matrixmaterial 118 eingebettete, flache, aber dreidimensional geformte Geflechtschläuche 125 gebildet, die entlang der Außenkontur der Lehnenstruktur 110 verlaufen. Flach bedeutet vorliegend, dass jeder Geflechtschlauch 125 keinen oder nur einen sehr kleinen inneren Hohlraum hat. Jeder der beiden Geflechtschläuche 125 ist aus einem Schlauch mit beispielsweise ursprünglich rundem Querschnitt zusammengepresst, so dass - wie in Figur 5 erkennbar - der Querschnitt eines jeden der beiden Geflechtschläuche 125 einen Schlauchabschnitt aufweist, der in seiner Länge etwa der Hälfte des Innenumfangs des Querschnitts des Gewebeschlauchs 125 entspricht und dem übrigen Schlauchabschnitt sehr dicht gegenüber liegt oder an diesem anliegt. Der eventuell vorhandene kleine Hohlraum ist vorliegend und vorzugsweise mit Matrixmaterial 118 gefüllt.

Jeder der beiden Geflechtschläuche 125 besteht aus einem Carbonfasergewebe, vorliegend mit einer +/- 45° Faserorientierung.

Der Querschnitt der beiden flachen Geflechtschläuche 125 ist jeweils annähernd S-förmig geformt. Die beiden Geflechtschläuche 125 sind zueinander benachbart und in weitgehend gleicher Lage zueinander ausgerichtet. In einem ersten Endbereich 125.1 des Querschnittes beider Geflechtschläuche 125, der in Richtung der Mitte der Lehnenstruktur 110 ausgerichtet ist, nehmen die beiden Geflechtschläuche 125 die äußeren Ränder der einzelnen Gewebelagen 116 zwischen sich auf. Dadurch überlappen die Geflechtschläuche 125 die äußeren Ränder der Gewebelagen 116. Die äußeren Ränder der einzelnen Gewebelagen 116 und die beiden Geflechtschläuche 125 sind in dem ersten Endbereich 125.1 mittels des Matrixmaterials 118 miteinander verbunden.

In einem zweiten Endbereich 125.2 des Querschnittes beider Geflechtschläuche 125, der dem ersten Endbereich 125.1 gegenüber liegt und die Außenkante der Lehnenstruktur 110 definiert, liegen die Konturen der Geflechtschläuche 125 unmittelbar ineinander und sind durch Matrixmaterial 118 umgeben und zueinander fixiert.

Toleranzen im Beschnitt und in der Ausrichtung der einzelnen Gewebelagen 116 sind durch die beschriebene überlappende Anordnung der Geflechtschläuche 125 zu den äußeren Ränder der einzelnen Gewebelagen 116 ausgeglichen, so dass die Außenkontur der Lehnenstruktur 110 unbeschnitten ist, aber dennoch durch die Geflechtschläuche 125 einen glatten und kontinuierlichen Konturverlauf hat.

In einer Abwandlung des Ausführungsbeispiels bildet nur genau ein Geflechtschlauch 125 abschnittsweise den äußeren, umlaufenden Randbereich der Lehnenstruktur 110. Die Gewebelagen 116 überlappen den Geflechtschlauch 125 abschnittsweise, jedoch nicht bis zur Außenkontur der Lehnenstruktur 110.

In einer weiteren Abwandlung des Ausführungsbeispiels bildet ein flaches Gewebeband oder eine Litze abschnittsweise den äußeren, umlaufenden Randbereich der Lehnenstruktur 110. Es sind auch zwei Gewebebänder denkbar, die die Ränder der Gewebelagen 116 entsprechend zwischen sich aufnehmen.

Die Lehnenstruktur 110 ist weitgehend spiegelsymmetrisch zu einer parallel zur Längsrichtung x und parallel zur Vertikalrichtung z durch die Sitzmitte verlaufenden Ebene.

Die Lehnenstruktur 110 umfasst, in Querrichtung y gesehen, in beiden äußeren Bereichen eine weitgehend eben ausgebildete Anbindungsfläche 112 zur Anbindung jeweils eines der beiden Beschlagoberteile 20. Die beiden Anbindungsflächen 112 verlaufen senkrecht zur Lehnenschwenkachse A und somit parallel zur Längsrichtung x und zur Vertikalrichtung z.

In den Figuren sind die beiden Anbindungsflächen 112 transparent dargestellt, so dass jeweils ein in den Bereichen der beiden Anbindungsflächen 112 der Lehnenstruktur 110 eingearbeitetes Einlegeteil 140 sichtbar ist, obwohl dieses, wie nachfolgend noch näher beschrieben wird, von Gewebelagen 116 und Matrixmaterial 118 umgeben ist. Auch die von der Lehnenstruktur 110 teilweise verdeckten Beschlagoberteile 20 sind in den Figuren aufgrund der transparenten Darstellungsweise sichtbar.

Die beiden Einlegeteile 140 und die beiden Anbindungsflächen 112 sind zu einer in Längsrichtung x und in Vertikalrichtung z durch die Sitzmitte verlaufenden Spiegelebene symmetrisch zueinander aufgebaut, so dass nachfolgend nur eine Seite der Lehnenstruktur 110 beschrieben wird.

Das Einlegeteil 140 besteht aus Stahlblech, insbesondere Edelstahlblech oder einem Stahlblech mit Antikorrosionsbeschichtung, und umfasst eine weitgehend ebene Platte 141. In die Platte 141 sind drei Gewindebuchsen 142 mit einem Innengewinde 143 eingeschweißt. Die Mittellinien der Innengewinde 143 sind in Querrichtung y ausgerichtet. Im Bereich der Innengewinde 143 ist das Einlegeteil 140 nicht von Gewebelagen 116 oder Matrixmaterial 118 bedeckt.

Eine Zentrierbohrung 146 dient der Ausrichtung des Einlegeteils 140 in einem Werkzeug während der Herstellung der Lehnenstruktur 110, insbesondere auch der Ausrichtung zu dem in Querrichtung y gesehen gegenüberliegenden Einlegeteil 140. Alternativ zur Zentrierbohrung 146 oder zusätzlich zu dieser kann auch eine Gewindebuchse zum Anschrauben eines Zusatzbauteils, wie beispielsweise eines Elektromotors zum Antrieb der Beschläge 10, vorgesehen sein.

Die Platte 141 umfasst zudem mehrere Durchlässe 148, vorliegend kreisrunde Löcher mit jeweils einer Mittelachse parallel zur Querrichtung y und mit einem Durchmesser, der kleiner als der Durchmesser der Innengewinde 143 ist. Die Durchlässe 148 ermöglichen ein Hindurchtreten von viskosem Matrixmaterial 118 während des Herstellprozesses der Lehnenstruktur 110.

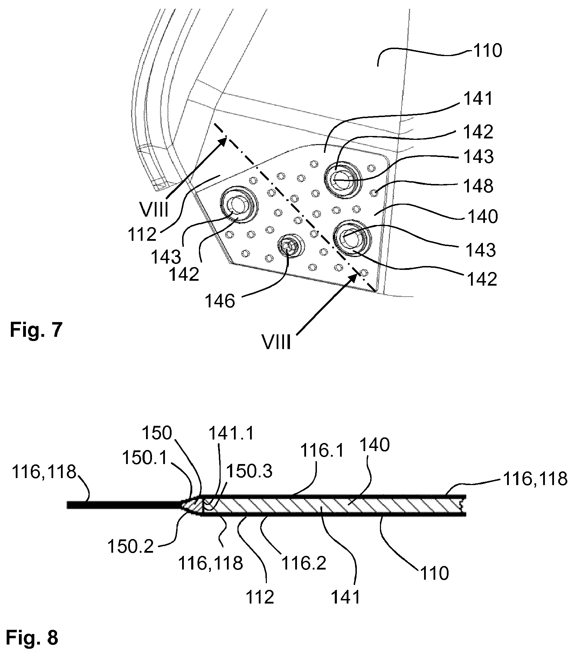

In Fig. 8 ist ein Schnitt durch die Lehnenstruktur 110 im Bereich des Einlegeteils 140 dargestellt. Eine der beiden flächigen Seiten des Einlegeteils 140 ist von einer ersten Lage 116.1 aus Gewebelagen 116 und Matrixmaterial 118 bedeckt, die andere flächige Seite des Einlegeteils 140 ist von einer zweiten Lage 116.2 aus Gewebelagen 116 und Matrixmaterial 118 bedeckt. Geringfügig beabstandet zu einer Kantenfläche 141.1 der Platte 141 laufen die erste Lage 116.1 und die zweite Lage 116.2 außerhalb des Bereiches der Platte 141 zusammen und bilden dort in monolithischer Weise einen einheitlichen Verbund aus Gewebelagen 116 und Matrixmaterial 118.

Im Übergangsbereich zwischen der Platte 141 und dem monolithischen Bereich aus Gewebelagen 116 und Matrixmaterial 118 ist aufgrund von minimal zulässigen Biegeradien der Gewebelagen 116 ein im Querschnitt dreieckiger, insbesondere keilförmiger Bereich ohne Gewebelagen 116 gebildet, der mit einem dreieckigen, insbesondere keilförmigen Einlegestrang 150 ausgefüllt ist. Der Einlegestrang 150 umfasst eine erste Seite 150.1, eine zweite Seite 150.2 und eine dritte Seite 150.3. In dem Übergangsbereich zwischen der Platte 141 und dem monolithischen Bereich liegt die erste Seite 150.1 an der ersten Lage 116.1 an, und die zweite Seite 150.2 liegt an der zweiten Lage 116.2 an. Eine dritte Seite 150.3 des Einlegestrangs 150 liegt an der durch die Blechstärke der Platte 141 definierten, umlaufenden Kantenfläche 141.1 des Einlegeteils 140 an.

Der Einlegestrang 150 ist vorliegend ein um die Außenkontur des Einlegeteils 140 umlaufender Glasfaserstrang und bewirkt durch seine Keilform einen kontinuierlichen, sanften Übergang zwischen dem monolithischen Bauteilbereich und dem Sandwichaufbau aus dem Einlegeteil 140 und den das Einlegeteil 140 umgebenden Gewebelagen 116 und dem Matrixmaterial 118. Der Einlegestrang 150 vermeidet dadurch eine Schädigung der Fasern und/oder des Matrixmaterials 118 im monolitischen Bereich durch Druck oder eine Messerwirkung.

Der Einlegestrang 150 kann in einer Abwandlung des Ausführungsbeispiels auch als Gummiband ausgeführt sein.

Das zweite Beschlagoberteil 20 ist vorliegend aus Stahlblech gefertigt und hat einen ebenen Grundkörper 22, der weitgehend parallel zur Längsrichtung x und zur Vertikalrichtung z verläuft und an der Anbindungsfläche 112 anliegt. Drei Durchgangslöcher 23 fluchten mit den drei Innengewinden 143 des Einlegeteils 140, so dass der Beschlag 10 an diesen Stellen an der Lehnenstruktur 110 anschraubbar ist. Die drei Gewindebuchsen 142 schließen bündig mit der Anbindungsfläche 112 ab oder stehen leicht über diese über, so dass der Grundkörper 22 des Beschlagoberteils 20 unmittelbar an den Stirnflächen der Gewindebuchsen 142 anliegt.

In einer Abwandlung des Ausführungsbeispiels ist die Anbindungsfläche 112 leicht gegenüber einer senkrecht zur Lehnenschwenkachse A verlaufenden Ebene geneigt, vorzugsweise um 1 bis 5°. Der Grundkörper 22 des Beschlagoberteils 20 verläuft entsprechend schräg.

In einer weiteren Abwandlung des Ausführungsbeispiels sind statt der drei Gewindebuchsen 142 drei Buchsen ohne Innengewinde als Durchgangsbuchsen vorgesehen und die drei Durchgangslöcher 23 sind durch drei Innengewinde ersetzt. Die Schraubverbindung erfolgt in diesem Fall aus Richtung der Sitzmitte.

Entlang des äußeren Randes des Grundkörpers 22 weist das Beschlagoberteil 20 einen senkrecht zum Grundkörper 22 verlaufenden Flansch 24 auf, der zur Außenseite des Fahrzeugsitzes 1 orientiert ist.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz, Sportsitz
- 10: Beschlag
- 20: Beschlagoberteil
- 22: Grundkörper
- 23: Durchgangsloch
- 24: Flansch
- 30: Beschlagunterteil
- 110: Lehnenstruktur, Composite-Bauteil
- 112: Anbindungsfläche
- 116: Gewebelage
- 116.1: erste Lage
- 116.2: zweite Lage
- 118: Matrixmaterial
- 125: Gewebestrang, Geflechtschlauch
- 125.1: erster Endbereich
- 125.2: zweiter Endbereich
- 130: Kern
- 140: Einlegeteil
- 141: Platte
- 141.1: Kantenfläche
- 142: Gewindebuchse
- 143: Innengewinde
- 146: Zentrierbohrung
- 148: Durchlässe
- 150: Einlegestrang
- 150.1: erste Seite
- 150.2: zweite Seite
- 150.3: dritte Seite
- 180: Designschale
- 210: Sitzunterbaustruktur
- A: Lehnenschwenkachse
- x: Längsrichtung
- y: Querrichtung
- z: Vertikalrichtung

## Patentansprüche

1. Composite-Bauteil (110) für einen Fahrzeugsitz (1), insbesondere einen Kraftfahrzeugsitz, mit mehreren Gewebelagen (116) aus einem Fasermaterial und einem die Gewebelagen (116) fixierenden Matrixmaterial (118), wobei
die äußere Bauteilkontur des Composite-Bauteils (110) zumindest abschnittsweise durch einen in das Matrixmaterial (118) eingebetteten Gewebestrang (125) gebildet ist, **dadurch gekennzeichnet, dass** die Gewebelagen (116) in den Abschnitten der äußeren Bauteilkontur des Composite-Bauteils (110), die durch einen in das Matrixmaterial (118) eingebetteten Gewebestrang (125) gebildet sind, vor der äußeren Bauteilkontur enden.

2. Composite-Bauteil (110) nach Anspruch 1, **dadurch gekennzeichnet, dass** der Gewebestrang (125) zumindest bereichsweise gekrümmt und tangential entlang der äußeren Bauteilkontur des Composite-Bauteils (110) verläuft.

3. Composite-Bauteil (110) nach einem der Ansprüche 1 bis 2, **dadurch gekennzeichnet, dass** der Gewebestrang (125) gegenüber seiner ursprünglichen Form verformt ist.

4. Composite-Bauteil (110) nach einem der Ansprüche 1 bis 3, **dadurch gekennzeichnet, dass** der Gewebestrang (125) die äußeren Ränder der Gewebelagen (116) teilweise überlappt.

5. Composite-Bauteil (110) nach einem der Ansprüche 1 bis 4, **dadurch gekennzeichnet, dass** die äußere Bauteilkontur des Composite-Bauteils (110) zumindest abschnittsweise durch zwei parallel verlaufende, in das Matrixmaterial (118) eingebettete Gewebestränge (125) gebildet ist.

6. Composite-Bauteil (110) nach Anspruch 5, **dadurch gekennzeichnet, dass** in Richtung der Bauteilmitte des Composite-Bauteils (110) orientierte erste Endbereiche (125.1) der beiden Gewebestränge (125) die äußeren Ränder der Gewebelagen (116) umklammern.

7. Composite-Bauteil (110) nach einem der Ansprüche 1 bis 6, **dadurch gekennzeichnet, dass** der Gewebestrang ein Geflechtschlauch (125) ist.

8. Composite-Bauteil (110) nach Anspruch 7, **dadurch gekennzeichnet, dass** der Geflechtschlauch (125) ein Geflechtschlauch mit einem ursprünglich kreisrunden Querschnitt ist, der in eine gekrümmte und gegenüber einem Kreis flachere Form verformt ist.

9. Composite-Bauteil (110) nach einem der Ansprüche 1 bis 6, **dadurch gekennzeichnet, dass** der Gewebestrang ein Gewebeband oder eine Litze (125) ist.

10. Composite-Bauteil (110) nach Anspruch 9, **dadurch gekennzeichnet, dass** die äußere Bauteilkontur des Composite-Bauteils (110) zumindest abschnittsweise durch genau eine in das Matrixmaterial (118) eingebettete Litze gebildet ist.

11. Composite-Bauteil (110) nach Anspruch 10, **dadurch gekennzeichnet, dass** die äußeren Ränder der Gewebelagen (116) die Litze umklammern.

12. Composite-Bauteil (110) nach einem der Ansprüche 1 bis 11, **dadurch gekennzeichnet, dass** die äußere Bauteilkontur des Composite-Bauteils (110) zumindest abschnittsweise durch mehrere in das Matrixmaterial (118) eingebettete Gewebestränge (125) gebildet ist.

13. Fahrzeugsitz (1), insbesondere Kraftfahrzeugsitz, mit einem Composite-Bauteil, insbesondere einer als Composite-Bauteil ausgeführten Lehnenstruktur (110), nach einem der Ansprüche 1 bis 12.

14. Fahrzeugsitz (1) nach Anspruch 13, **dadurch gekennzeichnet, dass** der Gewebestrang (125) einer Bezugsbefestigung eines Sitzbezuges an die Lehnenstruktur (110) dient, insbesondere indem der Gewebestrang (125) entlang seiner Erstreckung S-förmig ausgebildet ist.
